# FASCICULE DE BREVET EUROPEEN

(11) **EP 2 445 731 B1**
(45) Date de publication et mention de la délivrance du brevet: **22.04.2015**
(21) Numéro de dépôt: 10724861.9
(22) Date de dépôt: 17.06.2010
(51) Int. Cl.: B60C 15/06

(54) **BOURRELET DE PNEUMATIQUE POUR VEHICULE POIDS LOURD**
REIFENWULST FÜR EINEN LASTKRAFTWAGEN
TYRE BEAD FOR A LARGE GOODS VEHICLE

(30) Priorité: 22.06.2009 FR 0903046
(43) Date de publication de la demande: 02.05.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: GRISIN, Bopha, F-63200 Mozac (FR); BOYER, Chris, F-63800 Cournon D'auvergne (FR)
(74) Mandataire: Le Cam, Stéphane Georges Elie
(86) Numéro de dépôt international: PCT/EP2010/058560
(87) Numéro de publication internationale: WO 2010/149570

(56) Documents cités:
- WO-A-01/81103
- GB-A- 1 549 997
- JP-A- 5 124 408
- US-A- 4 962 803
- US-A1- 2005 133 135

## Description

La présente invention concerne les pneumatiques équipant des véhicules poids lourd, tels que des véhicules commerciaux, destinés au transport de lourdes charges. Elle concerne plus particulièrement les pneumatiques radiaux.

Cette invention concerne plus précisément les bourrelets de pneumatique, c'est-à-dire la partie du pneumatique qui assure la liaison mécanique entre le pneumatique et la jante sur laquelle il est monté. Un pneumatique comprend ainsi deux bourrelets, réunis respectivement par l'intermédiaire de deux flancs à une bande de roulement, destinée à venir en contact avec le sol par l'intermédiaire d'une surface de roulement.

Dans ce qui suit, on désigne par:
- « Plan méridien »: un plan contenant l'axe de rotation du pneumatique.
- « Plan équatorial »: le plan passant par le milieu de la surface de roulement et perpendiculaire à l'axe de rotation du pneumatique.
- « Direction radiale »: une direction perpendiculaire à l'axe de rotation du pneumatique.
- « Direction axiale »: une direction parallèle à l'axe de rotation du pneumatique.
- « Direction circonférentielle »: une direction perpendiculaire à un plan méridien.
- « Distance radiale »: une distance mesurée perpendiculairement à l'axe de rotation du pneumatique et à partir de l'axe de rotation du pneumatique.
- « Distance axiale »: une distance mesurée parallèlement à l'axe de rotation du pneumatique et à partir du plan équatorial.
- « Radialement » : selon une direction radiale.
- « Axialement » : selon une direction axiale.
- « Radialement intérieur, respectivement radialement extérieur»: dont la distance radiale est inférieure, respectivement supérieure.
- « Radialement le plus proche, respectivement radialement le plus éloigné»: dont la distance radiale est minimale, respectivement maximale.
- « Axialement intérieur, respectivement axialement extérieur»: dont la distance axiale est inférieure, respectivement supérieure.
- « Axialement le plus proche, respectivement axialement le plus éloigné»: dont la distance axiale est minimale, respectivement maximale.

Un pneumatique radial comprend plus particulièrement une armature de renforcement, comprenant une armature de sommet, radialement intérieure à la bande de roulement, et une armature de carcasse, radialement intérieure à l'armature de sommet.

L'armature de carcasse d'un pneumatique radial comprend une pluralité de renforts, organisés le plus souvent en une seule couche, en particulier dans le cas de renforts métalliques. Ces renforts sont parallèles entre eux et font, avec la direction circonférentielle, un angle compris entre 85° et 95°. L'armature de carcasse comprend une partie principale, reliant les deux bourrelets entre eux et s'enroulant, dans chaque bourrelet, autour d'un noyau tringle. Un noyau tringle comprend un élément de renforcement circonférentiel le plus souvent métallique entouré d'au moins un autre matériau : de manière non exhaustive, matériau polymérique, matériau textile. L'enroulement de l'armature de carcasse autour du noyau tringle va de l'intérieur vers l'extérieur du pneumatique pour former un retournement comprenant une extrémité libre. Le retournement de l'armature de carcasse, dans chaque bourrelet, permet l'ancrage de l'armature de carcasse au noyau tringle du bourrelet.

Il est également connu d'avoir, dans chaque bourrelet, une armature additionnelle, constituée d'au moins une couche de renforts, adjacente à au moins une partie de l'armature de carcasse.

Les renforts d'armature de carcasse ou d'armature additionnelle, pour un pneumatique pour véhicule poids lourd, sont le plus souvent des câbles métalliques. Toutefois des renforts constitués d'assemblages de filaments textiles, préférentiellement en polyamides aliphatiques ou en polyamides aromatiques, sont également envisageables. Dans le cas de renforts constitués d'assemblages de filaments textiles, l'armature de carcasse comprend le plus souvent plusieurs couches de renforts, dont le nombre est déterminé en fonction du niveau de résistance mécanique requis pour l'armature de carcasse.

Chaque bourrelet comprend un profilé de remplissage prolongeant radialement vers l'extérieur le noyau tringle. Le profilé de remplissage a, dans tout plan méridien, une section triangulaire et est formé d'au moins un matériau polymérique. Le profilé de remplissage peut être formé d'un empilage dans le sens radial d'au moins deux matériaux polymériques en contact suivant une surface de contact coupant tout plan méridien selon une trace méridienne. Le profilé de remplissage sépare axialement la partie principale de l'armature de carcasse et le retournement ou l'armature additionnelle.

Un matériau polymérique, après cuisson, est caractérisé mécaniquement par ses contraintes d'élasticité et ses propriétés à la rupture, déterminées par des essais de traction. Ces essais de traction sont effectués par l'homme du métier, selon une méthode connue, par exemple conformément à la norme française NF T 46-002 de septembre 1988. On mesure en seconde élongation, c'est-à-dire après un cycle d'accommodation, les modules sécants dits « nominaux » (ou contraintes apparentes, en MPa) ou les modules sécants dits « vrais » (ramenés dans ce cas à la section réelle de l'éprouvette) à 10% d'allongement (notés respectivement « M10 » et « E10 »), à 100% d'allongement (notés respectivement « M100 » et « E100 ») et à 300% d'allongement (notés respectivement « M300 » et « E300 »). Toutes ces mesures de traction sont effectuées dans les conditions normales de température (23 + ou - 2°C) et d'hygrométrie (50 + ou -5% d'humidité relative), selon la norme française NF T 40-101 de décembre 1979. On mesure également les contraintes à la rupture (en MPa) et les allongements à la rupture (en %) à une température de 23°C. Dans le présent document, on désigne par module d'élasticité du matériau polymérique du profilé de remplissage, le module sécant nominal à 10% d'allongement tel que défini précédemment.

Un matériau polymérique, après cuisson, est également caractérisé mécaniquement par sa dureté. La dureté est notamment définie par la dureté Shore A déterminée conformément à la norme ASTM D 2240-86.

En utilisation, le pneumatique est monté sur une jante de montage comprenant deux sièges de jante destinés à être en contact avec les parties des deux bourrelets radialement les plus intérieures et, axialement à l'extérieur de chaque siège de jante, un rebord de jante destiné à fixer la position axiale dudit bourrelet lorsque le pneu est monté et gonflé.

Au cours du roulage, les bourrelets du pneumatique sont soumis à des cycles de flexion en s'enroulant autour des rebords de jante, c'est-à-dire en adoptant en partie la géométrie généralement circulaire desdits rebords de jante. Ces flexions se traduisent en particulier par des variations de courbure combinées avec des variations de tension des renforts présents dans les bourrelets, notamment ceux de la partie principale de l'armature de carcasse, du retournement et de l'armature additionnelle. De plus ces cycles de flexion induisent, dans les matériaux polymériques du profilé de remplissage, et, plus particulièrement au voisinage immédiat des extrémités libres des renforts de retournement et d'armature additionnelle, des efforts de compression et d'extension qui génèrent des contraintes et des déformations thermomécaniques, susceptibles d'entraîner, dans la durée, une dégradation du pneumatique nécessitant son remplacement.

Les documents EP 0 826 524 et EP 0 992 369 ont déjà décrit, dans le cas d'une armature de carcasse radiale, des bourrelets dont la tenue thermomécanique est améliorée en vue de l'allongement de la durée de vie du pneumatique. Ces bourrelets comprennent deux ou trois matériaux polymériques de profilé de remplissage de duretés différentes, dont les positions relatives dans le bourrelet et les surfaces de contact sont optimisées en vue de réduire les contraintes et déformations thermomécaniques à l'intérieur du bourrelet.

Le document US 6 000 452 a également décrit un bourrelet destiné à prévenir une dégradation prématurée du pneumatique. La solution technique proposée consiste en un bourrelet ayant deux matériaux polymériques de profilé de remplissage de duretés différentes, le matériau polymérique le plus dur étant adjacent au noyau tringle et ayant un volume géométrique supérieur à un pourcentage donné du volume géométrique total du profilé de remplissage.

Le document US 2008/0035261 A1 décrit également un bourrelet à durée de vie augmentée. La solution technique proposée consiste en un bourrelet ayant deux matériaux polymériques de profilé de remplissage de modules d'élasticité différents, le matériau polymérique de module le plus élevé étant adjacent au noyau tringle et ayant une forme géométrique en L, pour une couche d'armature de carcasse radiale enroulée autour du noyau tringle, selon différents types de retournement.

Des bourrelets de pneumatique comprenant au moins deux matériaux polymériques de profilé de remplissage ont également été décrits dans les documents GB 1549997, US 4962803, US 2001/133135 etWO 01/81103.

Les inventeurs se sont donnés pour objectif d'améliorer l'endurance des bourrelets d'un pneumatique pour véhicule poids lourd, soumis à des conditions sévères de charge et de pression, c'est-à-dire significativement plus élevées que les conditions de charge et de pression nominales spécifiées par les normes de la « European Tire and Rim Technical Organisation ». A titre d'exemples non limitatifs, une charge égale à 1.5 fois la charge statique nominale ou une pression égale à 1.2 fois la pression nominale sont considérées comme sévères.

Cet objectif a été atteint, selon l'invention, par :
- un pneumatique pour véhicule poids lourd comprenant deux bourrelets destinés à entrer en contact avec une jante et réunis respectivement par l'intermédiaire de deux flancs à une bande de roulement,
- ce pneumatique comprenant une armature de carcasse comprenant une pluralité de renforts,
- cette armature de carcasse comprenant une partie principale s'enroulant dans chaque bourrelet autour d'un noyau tringle pour former un retournement,
- chaque bourrelet comprenant une armature additionnelle et un profilé de remplissage prolongeant radialement vers l'extérieur le noyau tringle,
- ce profilé de remplissage ayant, dans tout plan méridien, une section triangulaire et étant formé d'un empilage dans la direction radiale d'au moins deux matériaux polymériques en contact suivant une surface de contact coupant tout plan méridien selon une trace méridienne,
- l'extrémité axialement la plus extérieure de la trace méridienne de toute surface de contact entre deux matériaux polymériques du profilé de remplissage étant le point de ladite trace méridienne radialement le plus extérieur,
- l'extrémité axialement la plus intérieure de ladite trace méridienne étant le point de ladite trace méridienne radialement le plus intérieur,
- ladite trace méridienne étant au moins en partie radialement extérieure à la droite passant par les deux extrémités de ladite trace méridienne, la distance radiale entre les extrémités de la trace méridienne de toute surface de contact entre deux matériaux polymériques du profilé de remplissage est au moins égale à 5% de la hauteur théorique H de section du pneumatique,
- le module d'élasticité du matériau polymérique du profilé de remplissage en contact avec le noyau tringle étant supérieur au module d'élasticité de tout autre matériau polymérique du profilé de remplissage.

La trace méridienne de toute surface de contact entre deux matériaux polymériques du profilé de remplissage est axialement limitée vers l'extérieur par le retournement d'armature de carcasse, par l'armature additionnelle ou par un mélange polymérique axialement extérieur au profilé de remplissage : cette limite est l'extrémité axialement la plus extérieure de ladite trace méridienne.

La trace méridienne de toute surface de contact entre deux matériaux polymériques du profilé de remplissage est limitée axialement vers l'intérieur soit par l'armature de carcasse, soit par l'armature additionnelle : cette limite est l'extrémité axialement la plus intérieure de ladite trace méridienne.

La trace méridienne de toute surface de contact entre deux matériaux polymériques du profilé de remplissage n'est pas nécessairement continue : elle peut être coupée par le retournement d'armature de carcasse ou l'armature additionnelle.

Selon l'invention, il est avantageux d'avoir l'extrémité axialement la plus extérieure de la trace méridienne de toute surface de contact entre deux matériaux polymériques du profilé de remplissage comme point de ladite trace méridienne radialement le plus extérieur, et d'avoir l'extrémité axialement la plus intérieure de ladite trace méridienne comme point de ladite trace méridienne radialement le plus intérieur. Ce positionnement géométrique des extrémités de ladite trace méridienne est associé au positionnement géométrique de ladite trace méridienne au moins en partie radialement extérieur à la droite passant par les deux extrémités de ladite trace méridienne. Cette configuration géométrique permet d'avoir, pour toute trace méridienne, une forme dont la courbure est au moins en partie de même signe que celle du rebord de jante dont le profil méridien est généralement circulaire. Les inventeurs pensent qu'il en résulte un enroulement facilité du bourrelet autour du rebord de jante, lorsque le pneumatique est chargé. Par enroulement facilité on entend un enroulement qui répartit les contraintes et déformations dans le bourrelet et évite les concentrations de contraintes et déformations dans des zones locales du bourrelet, ce qui entraîne une meilleure endurance du bourrelet et donc une plus longue durée de vie du pneumatique.

Il est également avantageux, selon l'invention, d'avoir le module d'élasticité du matériau polymérique du profilé de remplissage en contact avec le noyau tringle supérieur au module d'élasticité de tout autre matériau polymérique du profilé de remplissage. En effet, ce matériau polymérique du profilé de remplissage en contact avec le noyau tringle assure la transition entre les mélanges polymériques de remplissage, qui lui sont radialement extérieurs, et le mélange polymérique du noyau tringle, dont le module plus élevé permet également une progressivité par rapport au module de l'élément de renforcement métallique du noyau tringle. Cette conception assure une transition de rigidité limitant encore les concentrations de contraintes et de déformations dans ce matériau polymérique du profilé de remplissage en contact avec le noyau tringle, et donc un risque de dégradation mécanique prématurée du bourrelet.

Il est également avantageux d'avoir l'extrémité axialement la plus extérieure de la trace méridienne de toute surface de contact entre deux matériaux polymériques du profilé de remplissage comme point de ladite trace méridienne axialement le plus éloigné de la partie principale de l'armature de carcasse.

Il est encore avantageux d'avoir l'extrémité axialement la plus intérieure de la trace méridienne de toute surface de contact entre deux matériaux polymériques du profilé de remplissage comme point de ladite trace méridienne axialement le plus proche de la partie principale de l'armature de carcasse.

Selon un mode de réalisation préféré de l'invention, la trace méridienne de toute surface de contact entre deux matériaux polymériques du profilé de remplissage est convexe, c'est-à-dire qu'en tout point de ladite trace méridienne, le centre de courbure est positionné radialement à l'intérieur de la trace méridienne. Dans le cas limite où le centre de courbure en tout point de la trace méridienne est positionné radialement à l'intérieur et à l'infini, la trace méridienne est rectiligne : elle est encore qualifiée de convexe en tant que cas limite de convexité.

Dans ces conditions, toute trace méridienne présente en tout point une courbure de même signe que celle du rebord de jante, ce qui, selon les inventeurs, garantit un enroulement optimal du bourrelet autour du rebord de jante, lorsque le pneumatique est chargé. Par enroulement optimal on entend un enroulement qui répartit les contraintes et déformations dans le bourrelet en les minimisant.

Selon un mode de réalisation avantageux de l'invention, le module d'élasticité de tout matériau polymérique du profilé de remplissage est au moins égal à 1,2 fois le module d'élasticité du matériau polymérique du profilé de remplissage, avec lequel il est en contact et qui lui est radialement extérieur. Par conséquent, les modules d'élasticité des différents matériaux polymériques du profilé de remplissage suivent une progression géométrique décroissante lorsqu'on s'éloigne radialement vers l'extérieur du noyau tringle. Ce ratio minimum de 1,2 entre les modules d'élasticité de deux matériaux polymériques du profilé de remplissage en contact permet l'obtention d'un gradient de rigidité de flexion progressif du bourrelet, lorsqu'on s'éloigne radialement vers l'extérieur du noyau tringle.

Il est également avantageux que le module d'élasticité de tout matériau polymérique du profilé de remplissage soit au plus égal à 10 fois le module d'élasticité du matériau polymérique du profilé de remplissage qui lui est radialement extérieur et adjacent. Ce ratio maximum de 10 entre les modules d'élasticité de deux matériaux polymériques du profilé de remplissage en contact permet d'éviter, lorsqu'on passe d'un matériau polymérique au matériau en contact et radialement extérieur, une variation brutale de contraintes et de déformations dans le bourrelet et donc une pénalisation en endurance du bourrelet.

Selon un autre mode de réalisation avantageux de l'invention, le profilé de remplissage comprend au moins trois matériaux polymériques. Ce nombre minimal de trois matériaux polymériques du profilé de remplissage, radialement superposés dans le profilé de remplissage, permet une progressivité de la variation de rigidité de flexion du bourrelet, par le choix des modules d'élasticité respectifs des trois matériaux polymériques du profilé de remplissage.

Il est également avantageux d'avoir le module d'élasticité de tout matériau polymérique du profilé de remplissage au moins égal à 2 MPa. Une valeur plus faible pourrait entraîner des déformations par fluage excessives dans un bourrelet de pneumatique, générant une dissipation d'énergie thermique susceptible de provoquer une déchéance prématurée du bourrelet.

Il est encore avantageux d'avoir le module d'élasticité de tout matériau polymérique du profilé de remplissage au plus égal à 25 MPa. Au-delà de cette valeur, la flexion du bourrelet serait insuffisante en raison d'une rigidité du bourrelet trop élevée, d'où un risque de rupture mécanique prématurée du bourrelet.

Un autre mode de réalisation avantageux de l'invention est caractérisé par le fait que toute extrémité de retournement d'armature de carcasse et de toute extrémité d'armature additionnelle est éloignée de toute trace méridienne de toute surface de contact entre deux matériaux polymériques du profilé de remplissage. A titre d' exemple non limitatif, une distance radiale d'une extrémité de retournement d'armature de carcasse ou d'armature additionnelle par rapport à une trace méridienne au moins égale à 2 mm peut être considérée comme une position éloignée de ladite trace méridienne. Cet éloignement doit être suffisant pour éviter la concomitance d'une extrémité libre de retournement d'armature de carcasse et d'armature additionnelle, agressive mécaniquement du fait de la présence d'extrémités de renforts métalliques coupés, et d'une surface de contact entre matériaux polymériques du profilé de remplissage moins robuste que les zones au coeur desdits matériaux polymériques.

Selon l'invention, il est également avantageux d'avoir la distance radiale entre les extrémités de la trace méridienne de toute surface de contact entre deux matériaux polymériques du profilé de remplissage au moins égale à 5% de la hauteur théorique de section du pneumatique. La hauteur théorique de section du pneumatique, ou « design section height », est définie par le « Design Guide » de la « European Tyre and Rim Organisation » (partie C - Commercial Vehicle Tyres). Une distance radiale entre les extrémités de ladite trace méridienne inférieure à cette distance minimale induit une trace méridienne, ayant la forme d'une droite quasiment parallèle à l'axe de rotation, donc de courbure quasiment nulle : ce qui empêche d'obtenir l'enroulement recherché du bourrelet par rapport au rebord de jante.

Un dernier avantage, selon l'invention, est d'avoir la distance radiale entre les extrémités de la trace méridienne de toute surface de contact entre deux matériaux polymériques du profilé de remplissage au plus égale à 15% de la hauteur théorique de section du pneumatique. Une distance radiale entre les extrémités de ladite trace méridienne supérieure à cette distance maximale induit une trace méridienne, dont la courbure en tout point est très supérieure à celle du rebord de jante, ce qui ne permet pas non plus d'obtenir l'enroulement recherché du bourrelet par rapport au rebord de jante.

Les caractéristiques de l'invention seront mieux comprises à l'aide de la description des figures annexées 1 à 5, qui représentent des exemples de réalisation de l'invention:
- la figure 1 présente une vue en coupe dans un plan méridien du bourrelet d'un pneumatique pour véhicule poids lourd, selon un premier mode de réalisation préféré de l'invention.
- la figure 2 présente une vue en coupe dans un plan méridien du bourrelet d'un pneumatique pour véhicule poids lourd, selon un deuxième mode de réalisation de l'invention.
- la figure 3 présente une vue en coupe dans un plan méridien du bourrelet d'un pneumatique pour véhicule poids lourd, selon un troisième mode de réalisation de l'invention.
- la figure 4 présente une vue en coupe dans un plan méridien du bourrelet d'un pneumatique pour véhicule poids lourd, pris comme référence dans l'état de la technique.
- la figure 5 présente une vue en coupe globale dans un plan méridien d'un pneumatique pour véhicule poids lourd.

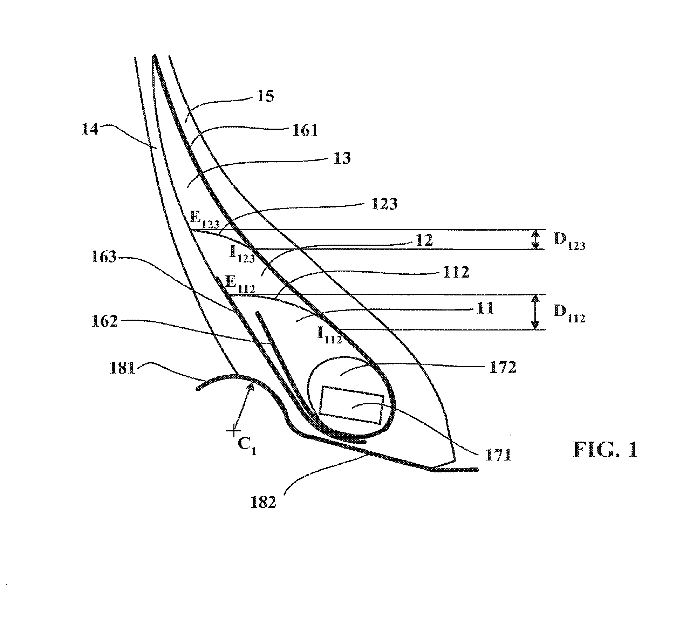

Les figures 1 à 5 ne sont pas représentées à l'échelle pour en faciliter la compréhension.

Sur la figure 1, est représenté un bourrelet de pneumatique pour véhicule poids lourd, selon un premier mode de réalisation préféré de l'invention. Ce premier mode de réalisation préféré comprend, au niveau de chaque bourrelet :
- une partie principale d'armature de carcasse 161, comprenant une seule couche de renforts métalliques, s'enroulant autour d'un noyau tringle pour former un retournement 162,
- ce noyau tringle comprenant un élément de renforcement circonférentiel métallique 171 entouré d'un matériau polymérique 172,
- une armature additionnelle 163,
- un profilé de remplissage prolongeant radialement vers l'extérieur le noyau tringle, ayant, dans tout plan méridien, une section triangulaire et étant formé d'un empilage dans le sens radial de trois matériaux polymériques 11, 12, 13 en contact deux à deux respectivement suivant une surface de contact coupant tout plan méridien selon une trace méridienne 112, 123,
- un matériau polymérique 14, axialement le plus extérieur, en contact avec l'air atmosphérique,
- un matériau polymérique 15, radialement le plus intérieur, en contact avec le gaz de gonflage du pneumatique,
- une jante, comprenant un rebord de jante 181 de profil méridien circulaire, autour duquel vient fléchir en s'enroulant le bourrelet du pneumatique chargé, et un siège 182, en contact avec la partie radialement la plus intérieure du bourrelet.

Chaque trace méridienne 112, 123 de la figure 1 a :
- son extrémité axialement la plus extérieure (E₁₁₂, E₁₂₃) radialement la plus extérieure et axialement la plus éloignée de la partie principale 161 de l'armature de carcasse,
- son extrémité axialement la plus intérieure (I₁₁₂, I₁₂₃), radialement la plus intérieure et axialement la plus proche de la partie principale 161 de l'armature de carcasse
- tous ses points radialement extérieurs à la droite passant par les deux extrémités de ladite trace méridienne.
De plus, chaque trace méridienne 112, 123 de la figure 1 est convexe.

L'extrémité axialement la plus extérieure E₁₁₂ de la trace méridienne 112 est en contact avec l' armature additionnelle 163, alors que son extrémité axialement la plus intérieure I₁₁₂ est en contact avec la partie principale 161 de l'armature de carcasse. L'extrémité axialement la plus extérieure E₁₂₃ de la trace méridienne 123 est en contact avec le matériau polymérique 14, alors que son extrémité axialement la plus intérieure I₁₂₃ est en contact avec la partie principale 161 de l'armature de carcasse.

Les distances radiales entre l'extrémité axialement la plus extérieure et l'extrémité axialement la plus intérieure de chaque trace méridienne 112 et 123 sont respectivement D₁₁₂ et D₁₂₃.

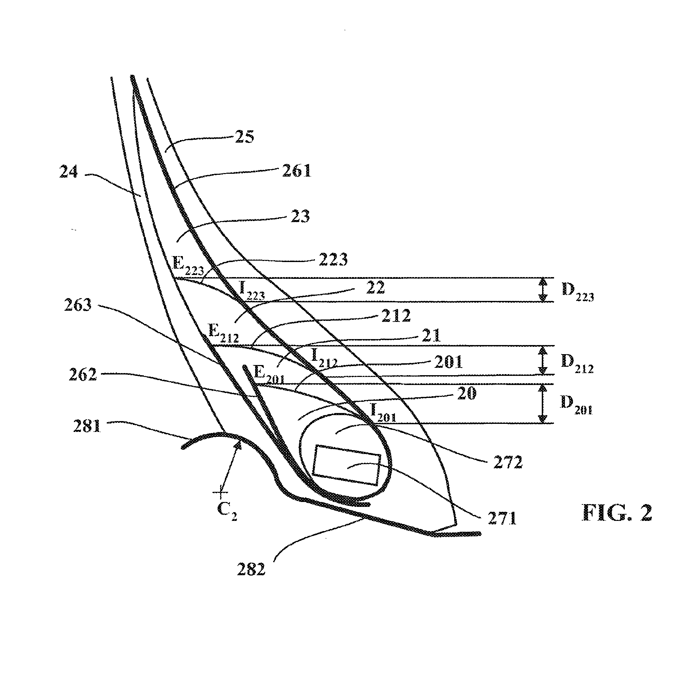

Le mode de réalisation de la figure 2 diffère de celui de figure 1, par la présence d'un matériau polymérique de remplissage supplémentaire 20 en contact avec le matériau polymérique de remplissage 21 selon une surface de contact dont la trace méridienne est 201. La trace méridienne 201 est caractérisée par une extrémité axialement la plus extérieure E₂₀₁ en contact avec le retournement 262, une extrémité axialement la plus intérieure I₂₀₁ en contact avec la partie principale 261 de l'armature de carcasse, et une distance radiale entre les deux extrémités D₂₀₁.

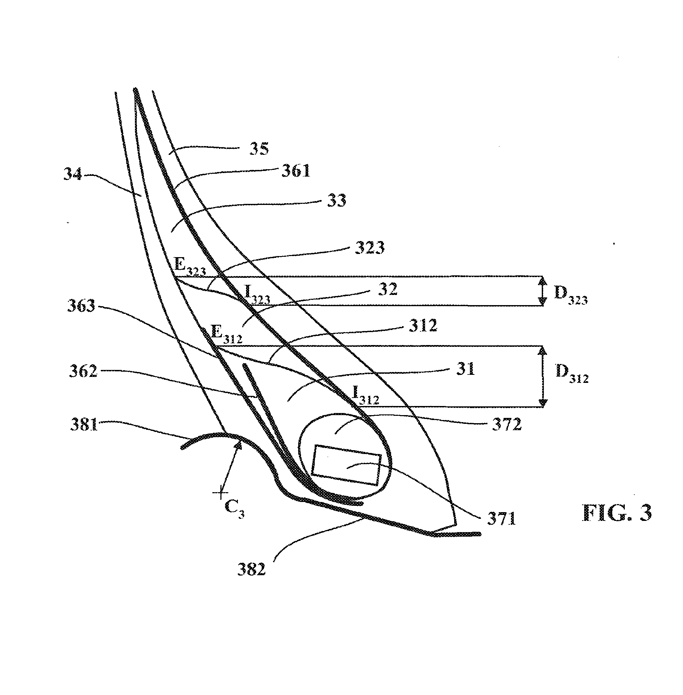

Le mode de réalisation de la figure 3 diffère de celui de figure 1, par des traces méridiennes partiellement convexes, c'est-à-dire dont au moins une partie est radialement extérieure à la droite passant par les deux extrémités de ladite trace méridienne.

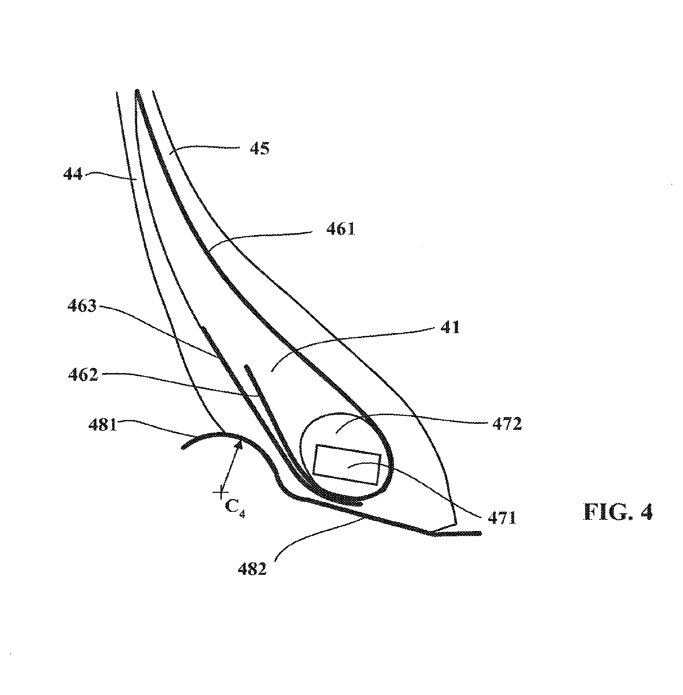

La figure 4 présente un bourrelet d'un pneumatique pour véhicule poids lourd, pris comme référence de l'état de la technique. Un tel bourrelet comprend un profilé de remplissage constitué d'un matériau polymérique unique 41.

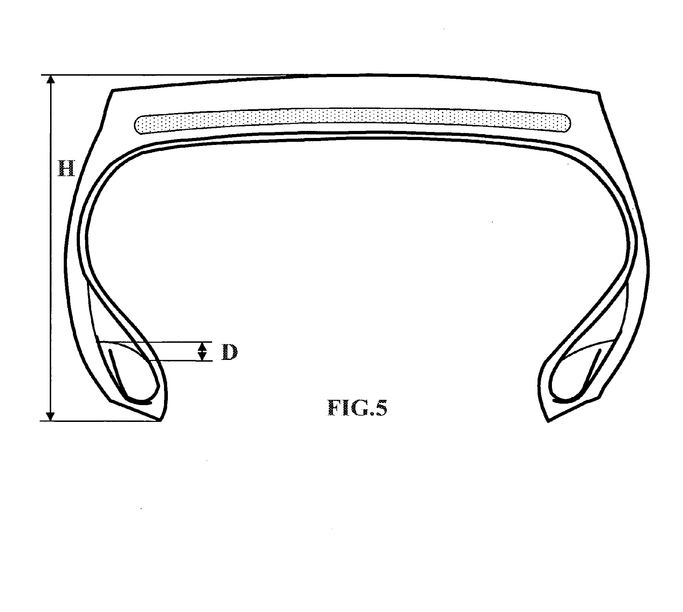

La figure 5 schématise les deux distances radiales caractéristiques H, hauteur théorique de section du pneumatique, ou « design section height », telle que définie par le « Design Guide » de la « European Tyre and Rim Organisation » (partie C - Commercial Vehicle Tyres), et D, distance radiale entre les deux extrémités d'une trace méridienne donnée.

L'invention a été plus particulièrement étudiée dans le cas d'un pneumatique pour véhicule lourd de dimension 315x60R22.5. Selon la « European Tyre and Rim Organisation », les conditions nominales d'utilisation d'un tel pneumatique sont une pression de gonflage égale à 9 bars, une charge statique égale à 3550 kg et une vitesse égale à 120 km/h. De plus, la hauteur théorique de section H d'un tel pneumatique est égale à 189 mm.

Le pneumatique 315x60R22.5 a été conçu conformément à l'invention, selon le mode de réalisation préféré schématisé sur la figure 1. La distance radiale D₁₁₂ entre l'extrémité axialement la plus extérieure et l'extrémité axialement la plus intérieure de la trace méridienne 112 est égale à 13 mm. Par conséquent, le ratio D₁₁₂/H est égal à 7% et est donc supérieur à 5% et inférieur à 15%. La distance radiale D₁₂₃ entre l'extrémité axialement la plus extérieure et l'extrémité axialement la plus intérieure de la trace méridienne 123 est égale à 19 mm. Par conséquent, le ratio D₁₂₃/H est égal à 10% et est donc supérieur à 5% et inférieur à 15%.

Concernant les modules d'élasticité des matériaux polymériques du profilé de remplissage, le ratio entre les modules d'élasticité des matériaux 11 et 12, respectivement égaux à 10 MPa et 5.5 MPa, est égal à 1,8. Le ratio entre les modules d'élasticité des matériaux 12 et 13, respectivement égaux à 5.5 MPa et 3.7 MPa, est égal à 1,5. Ces deux ratios sont donc supérieurs à 1,2 et inférieurs à 10, le module du matériau polymérique 11 en contact avec le noyau tringle étant supérieur à ceux des matériaux polymériques 11 et 12.

Des tests d'endurance réalisés sur un pneumatique conçu tel que précédemment, conformément au premier mode de réalisation préféré, avec une charge statique appliquée égale à 1.45 fois la charge statique nominale, ont montré un gain kilométrique de 70% par rapport au pneumatique de référence, avec un profilé de remplissage à matériau unique, tel qu'illustré à la figure 4.

L'invention ne doit pas être interprétée comme étant limitée aux exemples illustrés sur les figures mais peut être étendue à d'autres variantes de réalisation, par exemple, relatives aux nombres de matériaux polymériques du profilé de remplissage, aux formes des traces méridiennes des surfaces de contact entre deux matériaux polymériques du profilé de remplissage, aux modules d'élasticité des matériaux polymériques du profilé de remplissage et plus généralement à la conception des divers éléments du bourrelet, tels que, de manière non limitative, le noyau tringle et l'armature additionnelle.

## Revendications

1. Pneumatique pour véhicule poids lourd comprenant deux bourrelets destinés à entrer en contact avec une jante et réunis respectivement par l'intermédiaire de deux flancs à une bande de roulement, ce pneumatique comprenant une armature de carcasse comprenant une pluralité de renforts, cette armature de carcasse comprenant une partie principale (161) s'enroulant dans chaque bourrelet autour d'un noyau tringle (171, 172) pour former un retournement (162), chaque bourrelet comprenant une armature additionnelle (163) et un profilé de remplissage prolongeant radialement vers l'extérieur le noyau tringle, ce profilé de remplissage ayant, dans tout plan méridien, une section triangulaire et étant formé d'un empilage dans la direction radiale d'au moins deux matériaux polymériques (11, 12, 13) en contact suivant une surface de contact coupant tout plan méridien selon une trace méridienne (112, 123), l'extrémité axialement la plus extérieure (E₁₁₂, E₁₂₃) de la trace méridienne de toute surface de contact entre deux matériaux polymériques du profilé de remplissage étant point de ladite trace méridienne radialement le plus extérieur, l'extrémité axialement la plus intérieure (**I**₁₁₂, **I**₁₂₃) de ladite trace méridienne étant le point de ladite trace méridienne radialement le plus intérieur, ladite trace méridienne (112, 123) étant au moins en partie radialement extérieure à la droite passant par les deux extrémités (E₁₁₂, I₁₁₂, E₁₂₃, I₁₂₃) de ladite trace méridienne, **caractérisé en ce que** la distance radiale (D₁₁₂, D₁₂₃) entre les extrémités de la trace méridienne (112, 123) de toute surface de contact entre deux matériaux polymériques du profilé de remplissage est au moins égale à 5% de la hauteur théorique H de section du pneumatique et **en ce que** le module d'élasticité du matériau polymérique (11) du profilé de remplissage en contact avec le noyau tringle est supérieur au module d'élasticité de tout autre matériau polymérique (12, 13) du profilé de remplissage.

2. Pneumatique pour véhicule poids lourd selon la revendication 1, **caractérisé en ce que** l'extrémité axialement la plus extérieure (E₁₁₂, E₁₂₃) de la trace méridienne de toute surface de contact entre deux matériaux polymériques du profilé de remplissage est le point de ladite trace méridienne axialement le plus éloigné de la partie principale (161) de l'armature de carcasse.

3. Pneumatique pour véhicule poids lourd selon l'une quelconque des revendications 1 ou 2, **caractérisé en ce que** l'extrémité axialement la plus intérieure (I₁₁₂, I₁₂₃) de la trace méridienne de toute surface de contact entre deux matériaux polymériques du profilé de remplissage est le point de ladite trace méridienne axialement le plus proche de la partie principale (161) de l'armature de carcasse.

4. Pneumatique pour véhicule poids lourd selon l'une quelconque des revendications 1 à 3, **caractérisé en ce qu**'en tout point de la trace méridienne (112, 123) de toute surface de contact entre deux matériaux polymériques du profilé de remplissage, le centre de courbure est positionné radialement à l'intérieur de la trace méridienne.

5. Pneumatique pour véhicule poids lourd selon l'une quelconque des revendications 1 à 4, **caractérisé en ce que** le module d'élasticité de tout matériau polymérique (11, 12) du profilé de remplissage est au moins égal à 1,2 fois le module d'élasticité du matériau polymérique (12, 13) du profilé de remplissage, avec lequel il est en contact et qui lui est radialement extérieur.

6. Pneumatique pour véhicule poids lourd selon l'une quelconque des revendications 1 à 5, **caractérisé en ce que** le module d'élasticité de tout matériau polymérique (11, 12) du profilé de remplissage est au plus égal à 10 fois le module d'élasticité du matériau polymérique (12, 13) du profilé de remplissage, avec lequel il est en contact et qui lui est radialement extérieur.

7. Pneumatique pour véhicule poids lourd selon l'une quelconque des revendications 1 à 6, **caractérisé en ce que** le profilé de remplissage comprend au moins trois matériaux polymériques (11, 12, 13).

8. Pneumatique pour véhicule poids lourd selon l'une quelconque des revendications 1 à 7, **caractérisé en ce que** toute extrémité de retournement (162) d'armature de carcasse et toute extrémité d'armature additionnelle (163) est éloignée de toute trace méridienne (112, 123) de toute surface de contact entre deux matériaux polymériques (11, 12, 13) du profilé de remplissage.

9. Pneumatique pour véhicule poids lourd selon l'une quelconque des revendications 1 à 8, **caractérisé en ce que** la distance radiale (D₁₁₂, D₁₂₃) entre les extrémités de la trace méridienne (112, 123) de toute surface de contact entre deux matériaux polymériques du profilé de remplissage est au plus égale à 15% de la hauteur théorique H de section du pneumatique.

## Patentansprüche

1. Reifen für einen Lastkraftwagen, welcher zwei Wülste aufweist, die dazu bestimmt sind, mit einer Felge in Kontakt zu kommen, und über jeweils eine von zwei Seitenwänden mit einem Laufstreifen verbunden sind, wobei dieser Reifen eine Karkassenbewehrung aufweist, die mehrere Festigkeitsträger aufweist, wobei diese Karkassenbewehrung einen Hauptteil (161) aufweist, der in jedem Wulst um einen Wulstkern (171, 172) herumgelegt ist, um eine Umschlagung (162) zu bilden, wobei jeder Wulst eine zusätzliche Bewehrung (163) und eine Fülleinlage, die den Wulstkern radial nach außen verlängert, aufweist, wobei diese Fülleinlage in jeder Meridianebene einen dreieckigen Querschnitt aufweist und in der radialen Richtung von einem Stapel von mindestens zwei Polymermaterialien (11, 12, 13) gebildet wird, die sich an einer Kontaktfläche in Kontakt befinden, welche jede Meridianebene entlang einer Meridianspur (112, 123) schneidet, wobei das axial äußerste Ende (E₁₁₂, E₁₂₃) der Meridianspur jeder Kontaktfläche zwischen zwei Polymermaterialien der Fülleinlage der radial äußerste Punkt dieser Meridianspur ist, wobei das axial innerste Ende (I₁₁₂, I₁₂₃) dieser Meridianspur der radial innerste Punkt dieser Meridianspur ist, wobei die Meriadianspur (112, 123) wenigstens teilweise radial außerhalb der Geraden liegt, die durch die zwei Enden (E₁₁₂, I₁₁₂, E₁₂₃, I₁₂₃) dieser Meridianspur verläuft, **dadurch gekennzeichnet, dass** der radiale Abstand (D₁₁₂, D₁₂₃) zwischen den Enden der Meridianspur (112, 123) jeder Kontaktfläche zwischen zwei Polymermaterialien der Fülleinlage mindestens gleich 5 % der theoretischen Querschnittshöhe H des Reifens ist, und dadurch, dass der Elastizitätsmodul des Polymermaterials (11) der Fülleinlage, das sich mit dem Wulstkern in Kontakt befindet, größer als der Elastizitätsmodul jedes anderen Polymermaterials (12, 13) der Fülleinlage ist.

2. Reifen für einen Lastkraftwagen nach Anspruch 1, **dadurch gekennzeichnet, dass** das axial äußerste Ende (E₁₁₂, E₁₂₃) der Meridianspur jeder Kontaktfläche zwischen zwei Polymermaterialien der Fülleinlage der Punkt der Meridianspur ist, der axial am weitesten von dem Hauptteil (161) der Karkassenbewehrung entfernt ist.

3. Reifen für einen Lastkraftwagen nach einem der Ansprüche 1 oder 2, **dadurch gekennzeichnet, dass** das axial innerste Ende (I₁₁₂, I₁₂₃) der Meridianspur jeder Kontaktfläche zwischen zwei Polymermaterialien der Fülleinlage der Punkt der Meridianspur ist, der dem Hauptteil (161) der Karkassenbewehrung axial am nächsten ist.

4. Reifen für einen Lastkraftwagen nach einem der Ansprüche 1 bis 3, **dadurch gekennzeichnet, dass** in jedem Punkt der Meridianspur (112, 123) jeder Kontaktfläche zwischen zwei Polymermaterialien der Fülleinlage der Krümmungsmittelpunkt radial innerhalb der Meridianspur positioniert ist.

5. Reifen für einen Lastkraftwagen nach einem der Ansprüche 1 bis 4, **dadurch gekennzeichnet, dass** der Elastizitätsmodul jedes Polymermaterials (11, 12) der Fülleinlage mindestens gleich dem 1,2-fachen des Elastizitätsmoduls des Polymermaterials (12, 13) der Fülleinlage ist, mit dem es sich in Kontakt befindet und dass sich radial außerhalb von ihm befindet.

6. Reifen für einen Lastkraftwagen nach einem der Ansprüche 1 bis 5, **dadurch gekennzeichnet, dass** der Elastizitätsmodul jedes Polymermaterials (11, 12) der Fülleinlage höchstens gleich dem 10-fachen des Elastizitätsmoduls des Polymermaterials (12, 13) der Fülleinlage ist, mit dem es sich in Kontakt befindet und dass sich radial außerhalb von ihm befindet.

7. Reifen für einen Lastkraftwagen nach einem der Ansprüche 1 bis 6, **dadurch gekennzeichnet, dass** die Fülleinlage mindestens drei Polymermaterialien (11, 12, 13) aufweist.

8. Reifen für einen Lastkraftwagen nach einem der Ansprüche 1 bis 7, **dadurch gekennzeichnet, dass** jedes Ende der Umschlagung (162) der Karkassenbewehrung und jedes Ende der zusätzlichen Bewehrung (163) von jeder Meridianspur (112, 123) jeder Kontaktfläche zwischen zwei Polymermaterialien (11, 12, 13) der Fülleinlage entfernt ist.

9. Reifen für einen Lastkraftwagen nach einem der Ansprüche 1 bis 8, **dadurch gekennzeichnet, dass** der radiale Abstand (D₁₁₂, D₁₂₃) zwischen den Enden der Meridianspur (112, 123) jeder Kontaktfläche zwischen zwei Polymermaterialien der Fülleinlage höchstens gleich 15 % der theoretischen Querschnittshöhe H des Reifens ist.

## Claims

1. Tyre for a heavy goods vehicle comprising two beads intended to come into contact with a rim and connected respectively via two sidewalls to a tread strip, this tyre comprising a carcass reinforcement comprising a plurality of reinforcing elements, this carcass reinforcement comprising a main part (161) wrapped within each bead around a bead wire core (171, 172) to form a turned-back portion (162), each bead comprising an additional reinforcement (163) and a filler profiled element extending the bead wire core radially outwards, this filler profiled element having, in any meridian plane, a triangular cross section and being formed of a stack in the radial direction of at least two polymer materials (11, 12, 13) in contact along a contact surface that intersects any meridian plane along a meridian line (112, 123), the axially outermost end (E₁₁₂, E₁₂₃) of the meridian line of any contact surface for contact between two polymer materials of the filler profiled element being the radially outermost point on the said meridian line, the axially innermost end (I₁₁₂, I₁₂₃) of the said meridian line being the radially innermost point of the said meridian line, the said meridian line (112, 123) being at least partially radially on the outside of the straight line that passes through the two ends (E₁₁₂, I₁₁₂, E₁₂₃, I₁₂₃) of the said meridian line, **characterized in that** the radial distance (D₁₁₂, D₁₂₃) between the ends of the meridian line (112, 123) of any contact surface for contact between two polymer materials of the filler profiled element is at least equal to 5% of the design section height H of the tyre, and **in that** the elastic modulus of the polymer material (11) of the filler profiled element in contact with the bead wire core is greater than the elastic modulus of any other polymer material (12, 13) of the filler profiled element.

2. Tyre for a heavy goods vehicle according to Claim 1, **characterized in that** the axially outermost end (E₁₁₂, E₁₂₃) of the meridian line of any contact surface for contact between two polymer materials of the filler profiled element is the point on the said meridian line that is axially furthest from the main part (161) of the carcass reinforcement.

3. Tyre for a heavy goods vehicle according to either one of Claims 1 and 2, **characterized in that** the axially innermost end (I₁₁₂, I₁₂₃) of the meridian line of any contact surface for contact between two polymer materials of the filler profiled element is the point on the said meridian line that is axially closest to the main part (161) of the carcass reinforcement.

4. Tyre for a heavy goods vehicle according to any one of Claims 1 to 3, **characterized in that** at any point on the meridian line (112, 123) of any contact surface for contact between two polymer materials of the filler profiled element, the centre of curvature is positioned radially on the inside of the meridian line.

5. Tyre for a heavy goods vehicle according to any one of Claims 1 to 4, **characterized in that** the elastic modulus of any polymer material (11, 12) of the filler profiled element is at least equal to 1.2 times the elastic modulus of the polymer material (12, 13) of the filler profiled element with which it is in contact and which is radially on the outside of it.

6. Tyre for a heavy goods vehicle according to any one of Claims 1 to 5, **characterized in that** the elastic modulus of any polymer material (11, 12) of the filler profiled element is at most equal to 10 times the elastic modulus of the polymer material (12, 13) of the filler profiled element with which it is in contact and which is radially on the outside of it.

7. Tyre for a heavy goods vehicle according to any one of Claims 1 to 6, **characterized in that** the filler profiled element comprises at least three polymer materials (11, 12, 13).

8. Tyre for a heavy goods vehicle according to any one of Claims 1 to 7, **characterized in that** any turned-back end (162) of carcass reinforcement and any end of additional reinforcement (163) is away from any meridian line (112, 123) of any contact surface for contact between two polymer materials (11, 12, 13) of the filler profiled element.

9. Tyre for a heavy goods vehicle according to any one of Claims 1 to 8, **characterized in that** the radial distance (D11₂, D₁₂₃) between the ends of the meridian line (112, 123) of any contact surface for contact between two polymer materials of the filler profiled element is at most equal to 15% of the design section height H of the tyre.
